# EUROPÄISCHE PATENTSCHRIFT

(11) **EP 2 623 382 B1**
(45) Veröffentlichungstag und Bekanntmachung des Hinweises auf die Patenterteilung: **21.02.2018**
(21) Anmeldenummer: 11181972.8
(22) Anmeldetag: 20.09.2011
(51) Int. Cl.: B60T 8/1761

(54) **Fahrzeug mit Antiblockiersystem und Verfahren zum Abbremsen eines Fahrzeugs**
Vehicle with anti-blocking system and method for braking a vehicle
Véhicule doté d'un système antiblocage et procédé de freinage d'un véhicule

(43) Veröffentlichungstag der Anmeldung: 07.08.2013
(73) Patentinhaber: Siemens Aktiengesellschaft, 80333 München (DE); Lucas Automotive GmbH, 56070 Koblenz (DE)
(72) Erfinder: Bergmann, Dominik, 83679 Sachsenkam (DE); Fiege, Ludger Dr., 85567 Grafing (DE); Freitag, Gunter Dr., 81735 München (DE); Gerlich, Matthias, 80636 München (DE); Grieser-Schmitz, Stefan, 56070 Koblenz (DE); Lanze, Eugen, 56182 Urbar (DE); Robison, Ries, 48187 Canton MI (US)
(74) Vertreter: Maier, Daniel Oliver

(56) Entgegenhaltungen:
- EP-A1- 1 698 507
- EP-A1- 1 935 737
- EP-A1- 2 236 376
- WO-A1-2010/110027
- DE-A1- 19 604 134

## Beschreibung

Die Erfindung betrifft ein Fahrzeug mit einer Bremseinrichtung zum Abbremsen des Fahrzeugs. Mittels der Bremseinrichtung kann wenigstens ein Rad des Fahrzeugs mit einem Bremsmoment beaufschlagt werden. Die Erfindung betrifft auch ein Verfahren zum Abbremsen des Fahrzeugs. Mittels des Verfahrens wird eine Fahrgeschwindigkeit des Fahrzeugs verringert, mit welcher es mit dem wenigstens einen Rad über eine Rollfläche rollt. Zum Abbremsen des Fahrzeugs wird das Rad dabei zeitweise mit einem Bremsmoment beaufschlagt, welches entgegen einer Drehrichtung des Rades wirkt.

Unter einem Fahrzeug wird im Zusammenhang mit der Erfindung insbesondere ein Kraftwagen, ein Schienenfahrzeug oder ein Flugzeug verstanden. Durch die Erfindung wird für ein solches Fahrzeug ein Antiblockiersystem für wenigstens eines von dessen Rädern bereitgestellt.

Rollt ein Fahrzeug, also beispielsweise ein Kraftwagen, über eine Rollfläche einer Fahrbahn, so kann über ein Rad des Fahrzeugs eine parallel zu der Rollfläche wirkende Kraft höchstens so groß sein, wie die zwischen einer Lauffläche eines Reifens des Rades und der Rollfläche der Fahrbahn wirkende Haftreibung. Diese parallel zur Rollfläche übertragbare Kraft teilt sich dabei auf in die Antriebs- bzw. Bremskraft einerseits und die Seitenführungskraft andererseits.

Wird das Fahrzeug derart stark gebremst, dass die höchstens auf die Rollfläche übertragbare Bremskraft überschritten wird, so blockiert das Rad und gleitet oder rutscht über die Rollfläche. Um wieder eine Haftung zwischen der Lauffläche des Reifens und der Rollfläche der Fahrbahn zu erhalten, muss die Lauffläche des Reifens wieder soweit beschleunigt werden, dass ihre Relativgeschwindigkeit zur Rollfläche klein genug ist, um die Haftung wieder zu ermöglichen. Hierzu kann bei einem Fahrzeug mit hydraulischer Reibbremse vorgesehen sein, diese mit Hilfe eines Antiblockersystems zeitweise zu lösen. Dieses greift dazu in den hydraulischen Bremskreis über Magnetventile ein. Um die Notwendigkeit eines Eingreifens zu erkennen, wird die Raddrehzahl des Rades gemessen. Sobald die Drehzahl des Rades im Vergleich zur Fahrgeschwindigkeit zu stark absinkt, wird die Reibbremse gelöst, so dass sie kein Bremsmoment mehr auf das Rad ausübt. Das über die Rollfläche gleitende Rad wird daraufhin durch die zwischen dem Rad und der Fahrbahn wirkenden Reibkraft wieder ins Rollen gebracht und beschleunigt. Wenn die Drehzahl des Rades wieder der Drehzahl der übrigen Räder entspricht, kann das Rad mittels der Reibbremse wieder mit einem Bremsmoment beaufschlagt werden.

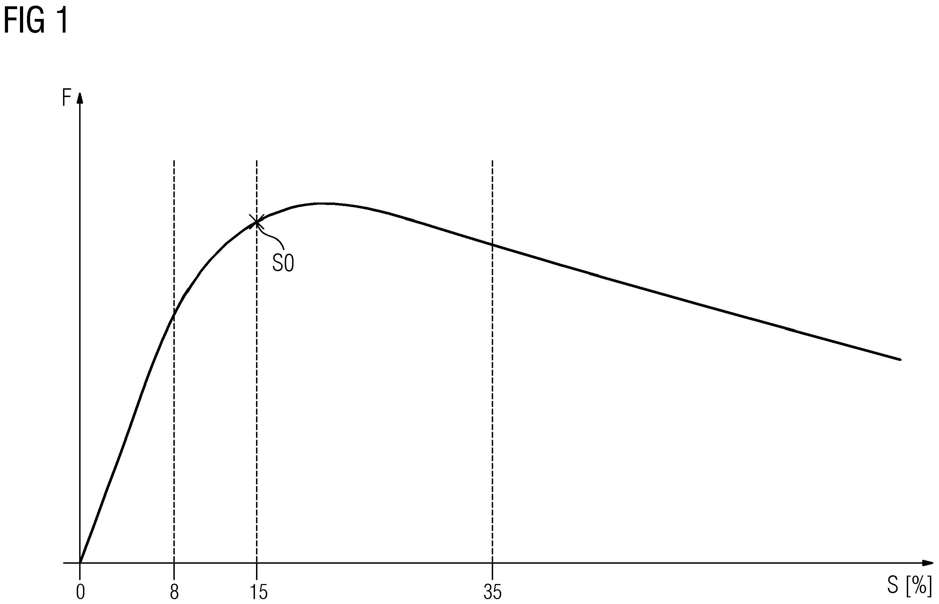

Ein Antiblockiersystem (ABS) greift in der Regel nicht erst bei Blockieren eines Rades ein. Vielmehr wird bereits bei einem noch rollenden Rad dessen Schlupf bezüglich der Fahrbahn geregelt. Dies wird im folgenden anhand von FIG 1 näher erläutert. Die bei einem geradeaus rollenden Fahrzeug über ein Rad desselben wirkende Bremskraft F nimmt, ausgehend von einem frei rollenden Rad mit einem Schlupf S=0% beim Abbremsen des Fahrzeugs (und in vergleichbarer Weise auch beim Beschleunigen desselben) mit steigendem Schlupf S zunächst bis zu einem Maximalwert zu, um dann ungefähr ab einem Schlupfwert von S=30% wieder geringer zu werden. Um beim Abbremsen des Fahrzeugs einen möglichst günstigen Schlupf zu erhalten, wird die Drehgeschwindigkeit des Rades durch das ABS abwechselnd aktiv über einen Bremseingiff vermindert und passiv bei gelöster Bremse über die Fahrbahn wieder beschleunigt. Hierdurch wird der Schlupf innerhalb eines Bereichs von z.B. S=8% bis S=35% geregelt. Während der ABS-Regelung pendelt der Drehgeschwindigkeit des Rades dabei zwischen entsprechend Drehzahlwerten.

Aus der DE 44 35 953 A1 ist bekannt, zum Abbremsen eines Personenkraftwagens ein Gesamtbremsmoment zu erzeugen, welches sich aus dem Bremsmoment eines hydraulischen Bremssystems einerseits und dem Bremsmoment eines im regenerativen Bereich betriebenen Elektromotors zusammensetzt.

In der EP 1 935 737 A1 ist ein Bremssystem mit einer hydraulischen Bremse und einer elektrischen Maschine offenbart. Mittels der elektrischen Maschine wird während eines Bremsvorgangs wahlweise an dem Rad ein zusätzliches Moment addiert oder subtrahiert. Im Zusammenhang mit einem Bremsvorgang auf Grundlage einer ABS-Bremsung ist beschrieben, dass abwechselnd Brems- und Beschleunigungssequenzen an einem abzubremsenden Rad erzeugt werden, um hierdurch den Schlupf des Rades nahe einem Sollwert zu halten.

Aus der WO 2010/110027 A1 ist bekannt, zum Erfassen einer Rotationsgeschwindigkeit eines Rads einen Encoder eines Nabenmotors zu benutzen.

Es ist Aufgabe der vorliegenden Erfindung, ein Antiblockiersystem für ein Fahrzeug zu verbessern.

Die Aufgabe wird durch die Gegenstände der unabhängigen Patentansprüche gelöst. Vorteilhafte Weiterbildungen des Verfahrens und des Fahrzeugs sind durch die Unteransprüche gegeben.

Bei dem erfindungsgemäßen Verfahren wird zum Verringern der Fahrgeschwindigkeit, welche das Fahrzeugs bezüglich einer Rollfläche aufweist, ebenfalls zeitweise wenigstens eine Rad des Fahrzeugs mit einem Bremsmoment beaufschlagt, welches entgegen einer Drehrichtung des Rades wirkt. Zusätzlich ist vorgesehen, während des Verringerns der Fahrgeschwindigkeit das Rad zeitweise mittels einer fahrzeugeigenen Beschleunigungseinrichtung mit einem Beschleunigungsmoment zu beaufschlagen, welches in die Drehrichtung wirkt. Bei dem Fahrzeug handelt es sich dabei insbesondere um einen Personen- oder Lastkraftwagen.

Durch das erfindungsgemäße Verfahren ergibt sich der Vorteil, dass man nun nicht mehr darauf angewiesen ist, dass das Rad allein durch die von der Fahrbahn auf das Rad wirkende Reibkraft beschleunigt wird, wenn sein Schlupf zu groß ist. Wird das Rad zu stark abgebremst oder verändert sich eine Oberflächeneigenschaft der Rollfläche entlang des Bremswegs und ergibt sich hierdurch eine verringerte Haftreibung, so wird auch während des Abbremsens durch die Beschleunigungseinrichtung der Schlupf des Rades aktiv angepasst.

Das erfindungsgemäße Fahrzeug kann in vorteilhafter Weise gemäß dem erfindungsgemäßen Verfahren abgebremst werden. Dazu weist das erfindungsgemäße Fahrzeug zum Einen eine Bremseinrichtung zum Abbremsen des Fahrzeugs auf. Dies Bremseinrichtung ist dazu ausgelegt, wenigstens ein Rad des Fahrzeugs mit einem Bremsmoment zu beaufschlagen. Zum Anderen ist eine Beschleunigungseinrichtung vorgesehen, welche dazu ausgelegt ist, das Rad mit einem Beschleunigungsmoment zu beaufschlagen. Durch eine Steuervorrichtung des erfindungsgemäßen Fahrzeugs kann dieses mittels der Bremseinrichtung und der Beschleunigungseinrichtung gemäß einer Ausführungsform des erfindungsgemäßen Verfahrens abgebremst werden.

Bei dem Bremsmoment und den Beschleunigungsmoment handelt es sich hierbei jeweils um ein resultierendes, insgesamt auf das Rad wirkendes Moment.

Die Beschleunigungseinrichtung umfasst wenigstens eine elektrische Maschine. Mit dieser lässt sich innerhalb einer besonders kurzen Zeitdauer ein Beschleunigungsmoment bereitstellen. Bei der elektrischen Maschine handelt es sich gemäß einer besonders bevorzugten Ausführungsform des erfindungsgemäßen Fahrzeugs um einen Radnabenmotor oder Radnabenantrieb des Rades. Dieser ermöglicht eine spielfreie Ankopplung an das Rad, so dass sich durch einen häufigen Wechsel zwischen einem Brems- einem Beschleunigungsmoment ein verhältnismäßig geringer Verschleiß der Anordnung ergibt.

Die Bremseinrichtung des erfindungsgemäßen Fahrzeugs umfasst auch eine Reibbremse. Mit einer solchen kann eine besonders hohe Bremsleistung bereitgestellt werden. Hierbei ist dabei vorgesehen, das zu wenigstens einem Zeitpunkt nur ein Teil des Betrages des Bremsmoments mittels einer Reibbremse erzeugt wird. Hierdurch ergibt sich der Vorteil, dass das Einstellen des endgültigen Bremsmoments mittels einer genauer und schneller regelbaren Einrichtung, nämlich einer elektrischen Maschine, eingestellt werden kann. Diese muss dabei dann nicht die volle Bremsleistung aufbringen können, wodurch sich die Herstellungskosten der genauer und schneller regelbaren Einrichtung gering halten lassen.

Zusätzlich zu einer Reibbremse ist bei dem erfindungsgemäßen Fahrzeug somit vorgesehen sein, dass die Bremseinrichtung wenigstens eine elektrische Maschine umfasst. Wie bereits erwähnt, ist mit einer solchen eine genauere und schnellere Einstellung des Bremsmoments möglich. Zusätzlich ist ein rekuperativer Bremsbetrieb möglich, in welchem kinetische Energie des Fahrzeugs in nutzbare elektrische Energie umgewandelt wird.

Gemäß dem erfindungsgemäßen Verfahren wird zwischen dem Beaufschlagen des Rades mit dem Bremsmoment und dem Beaufschlagen des Rades mit dem Beschleunigungsmoment auf der Grundlage einer Regelung gewechselt. Hierdurch lässt sich das Rad genauer in einem gewünschten, optimalen Schlupfpunkt halten. Als besonders vorteilhaft hat sich hierbei eine PID-Regelung erwiesen. Mit einer solchen lässt sich der Schlupf mit der elektrischen Maschine als Beschleunigungseinrichtung, während der Dauer des Bremsvorgangs ohne signifikante Abweichung auf einen einzelnen optimalen Sollwert einstellen.

Bei dem erfindungsgemäßen Fahrzeug weist die Steuereinrichtung zwei Regelkreise auf, von denen einer einen äußeren und einer einen inneren Regelkreis zum Einstellen des auf das Rad wirkenden resultierenden Moments bildet. Durch diese Ausführungsform ist es möglich, ein herkömmliches ABS mit einem Regelverfahren zu kombinieren, welches eine Ausführungsform des erfindungsgemäßen Verfahrens darstellt. Wird als Beschleunigungseinrichtung eine elektrische Maschine verwendet, so kann ein (verhältnismäßig langsamer) Regelkreis des herkömmlichen ABS den äußeren Regelkreis und ein (im Vergleich schnellerer) Regelkreis für die elektrische Maschine den inneren Regelkreis bilden. Hierdurch lässt sich ein nachrüstbares Bremssystem bereitstellen.

In Bezug auf das Beschleunigungsmoment sieht eine Ausführungsform des erfindungsgemäßen Verfahrens vor, durch mittels des Beschleunigungsmoments einem Betrag eines Schlupfes, welchen das Rad bezüglich der Rollfläche aufweist, zu verringern. Mit anderen Worten wird ein zu langsames oder blockiertes Rad wieder in einen Bereich eines günstigeren Schlupfes gebracht, ohne dabei das Fahrzeug insgesamt zu beschleunigen, d.h. die Fahrgeschwindigkeit zu vergrößern. Es wird nur solange beschleunigt, bis ein gewünschter kleinerer Schlupfwert erreicht ist.

Gemäß einer anderen Ausführungsform des erfindungsgemäßen Verfahrens wird bei Erkennen einer Kurvenfahrt des Fahrzeugs mittels des Beschleunigungsmoments ein Betrag einer zwischen dem Rad und der Rollfläche wirkenden Seitenführungskraft vergrößert. Hierdurch kann in vorteilhafter Weise ein Ausbrechen des Fahrzeugs verhindert werden. Das Einstellen einer gewünschten Seitenführungskraft kann z. B. gemäß den durch den Kamm'schen Reibkreis beschriebenen Zusammenhängen erfolgen.

Um eine Drehzahl des Rades genau bestimmen zu können, sieht eine Weiterbildung des erfindungsgemäßen Fahrzeugs eine Drehzahlmesseinrichtung vor, die dazu ausgelegt eine Drehzahl des Rades auf der Grundlage eines Signals eines Resolvers einer elektrischen Maschine zu ermitteln.

Die Erfindung wird im Folgenden anhand von Ausführungsbeispielen näher erläutert. Dazu zeigt:
- FIG 1: ein Diagramm mit einem Graphen, durch welchen ein prinzipieller Zusammenhang zwischen einem Schlupf eines Rades und einer auf das Rad wirkenden Bremskraft veranschaulicht ist, und
- FIG 2: eine schematische Darstellung eines Rades eines Personenkraftwagens, welcher eine Ausführungsform des erfindungsgemäßen Fahrzeugs darstellt.

Die Beispiele stellen bevorzugte Ausführungsformen der Erfindung dar.

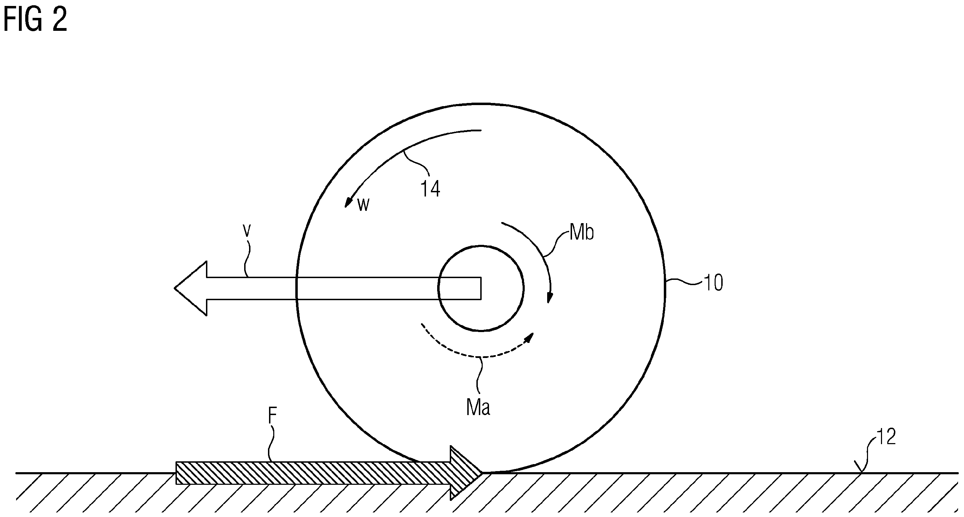

In FIG 2 ist ein Rad 10 gezeigt welches über eine Straße 12 rollt. Das Rad 10 gehört zu einem (nicht weiterer dargestellten) Personenkraftwagen, der sich mit einer Fahrgeschwindigkeit v entlang der Straße 12 bewegt. Das Rad ist mit einem (nicht dargestellt) elektrischen Radnabenantrieb gekoppelt, welcher eine elektrische Maschine, zum Beispiel eine Synchronmaschine oder eine Asynchronmaschine, aufweist. Mittels des Radnabenantriebs lässt sich der Personenkraftwagen sowohl beschleunigen als auch abbremsen.

Für die folgenden Erläuterungen sei angenommen, dass ein Fahrer des Personenkraftwagens gerade eine Vollbremsung ausführt. Der Personenkraftwagen rolle dabei gerade aus.

In Antwort auf eine Betätigung eines Bremspedals des Personenkraftwagens erzeugt der Radnabenantrieb ein Bremsmoment Mb, welches welches entgegen einer Rotationsrichtung 14 des Rades 10 auf dieses wirkt. Zum Erzeugen des Bremsmoments Mb werden durch ein Steuergerät des Radnabenantriebs Steuersignale an Leistungsschalter eines Wechselrichters der elektrischen Maschine übertragen, durch welche daraufhin Wicklungsströme in einem Stator der elektrischen Maschine derart eingestellt werden, dass ein magnetisches Drehfeld in der elektrischen Maschine das Bremsmoment Mb auf einen Rotor der elektrischen Maschine ausübt, welche mit dem Rad 10 mechanisch gekoppelt ist. Aufgrund des auf das Rad wirkenden Bremsmoments Mb verringert sich eine Rotationsgeschwindigkeit w des Rades 10. Dies vergrößert einen Schlupf S (siehe FIG 1) des Rades 10 bezüglich der Straße 12, und es wirkt eine Bremskraft F von der Straße 12 auf das Rad 10. Hierdurch wird schließlich die Fahrgeschwindigkeit v des Personenkraftwagens verringert.

Der Radnabenantrieb stellt einen hoch dynamisch steuerbaren Antrieb dar. Durch das Steuergerät des Radnabenantriebs wird der Schlupf S des Rades 10 auf einen Sollwert S0=15% eingestellt. Dieser Sollwert S0 stellt einen optimalen Wert dar, bei welchem sich die Bremskraft F einen Maximalwert aufweist, wenn noch eine kleine vorbestimmte Kraftreserve für einen Schlupf S>15% bereitgehalten werden soll. Das Rad 10 kann dabei im Falle einer zu starken Abbremsung (S>15%) oder eines Gleitens des Rades 10 über der Straße 12 aktiv mittels Elektromotors auch während des Bremsens beschleunigt werden, um den Schlupf S wieder auf den Sollwert S0 einzustellen. Hierzu wird in diesem Beispiel das Drehfeld der elektrischen Maschine durch entsprechendes Ansteuern der Leistungsschalter einfach innerhalb von weniger als 5 ms derart umgestellt, dass die elektrische Maschine auf das Rad 10 ein Beschleunigungsmoment Ma ausübt, welches in die Rotationsrichtung 14 wirkt. So wird wieder die Rotationsgeschwindigkeit w des Rades 10 auf einen optimalen Wert eingestellt, bei welchem sich der Sollwert S0 für den Schlupf ergibt. Damit ergibt sich ein Zeitvorteil im Verhältnis zu einem herkömmlichen ABS, welches bei einer zu starken Abbremsung eines Rades auf eine passive Beschleunigung des Rades durch die zwischen der Fahrbahn und dem Rad wirkende Reibkraft angewiesen ist.

Zudem wird bei dem Personenkraftwagen des Beispiels eine fahrdynamische Stabilität des Fahrzeugs erhöht, da die Regelschleife der Steuereinheit mit dem direkten auf den Rotor wirkenden Eingriff schneller ist als eine Regelschleife eines ABS, über welche ein hydraulisches System einer Reibbremse gesteuert wird.

Elektrische Maschinen verfügen üblicherweise über einen Resolver, der die Drehzahl besser auflöst als ein Drehzahlsensor, wie er in einem herkömmlichen ABS verwendet wird. Aufgrund der mechanischen Kopplung zwischen der elektrischen Maschine und dem Rad kann ein solcher Resolver auch zum Bestimmen der Drehzahl des Rades verwendet werden. Es ist aber natürlich auch möglich, einen separaten Drehzahlsensor zum Messen der Drehzahl des Rades zu nutzen.

Wie in dem Beispiel gezeigt, kann beim Einsatz von elektrischen Maschinen auch das Abbremsen elektromotorisch erfolgen, also nicht über eine Reibbremse. In diesen Fall steuert ein Regelalgorithmus der Steuereinheit sowohl das Vermindern als auch das Beschleunigen des Rades. Dadurch kann ein Jitter, d.h. ein Pendeln um den optimalen Schlupfwert, reduziert werden. Das Rad wird im Bremskraftmaximum gehalten. Die Führungsgröße "Rotationsgeschwindigkeit w des Rades" kann besser geregelt werden. Während der Bremsung ist das Rad länger im optimalen Schlupfpunkt gegenüber einem herkömmlichen ABS.

Letzteres Prinzip kann auch in Kombination mit einer Reibbremse verwendet werden. Dazu wird nur ein Teil der Bremskraft an der Reibbremse eingestellt. Die Regelung erfolgt dann über das Steuern der elektromotorischen Bremse. Die Summe der Bremskraft aus Reibbremse und elektromotorischer Bremse ergibt hierbei die Bremskraft, die notwendig ist, um das Rad im Bremskraftmaximum zu halten.

Die Wiederbeschleunigungsphase eines blockierten oder im Vergleich zur Fahrzeuggeschwindigkeit zu langsamen Rades kann durch den aktiven Eingriff des elektrischen Antriebs verkürzt werden. Man ist nicht mehr auf die Eigenbeschleunigung des Rades, welche vom Reibwert des Untergrunds abhängt, angewiesen. So wird das Rad besser im Punkt des optimalen Schlupfes gehalten. Hierdurch kann der Bremsweg verkürzt, die Abnutzung des Reifens des Rades reduziert und die Stabilität erhöht werden.

Der externe Raddrehzahlsensor kann entfallen, wenn für die Gewinnung der Drehzahlinformation der Resolver-Sensor genutzt wird, der in der elektrischen Maschine vorhanden ist. Dies erspart die Kosten für den Raddrehzahlsensor, die Montage, die Verkabelung und die zugehörige Auswerteschaltung.

## Patentansprüche

1. Verfahren zum Abbremsen eines Fahrzeugs, welches mit wenigstens einem Rad (10) über eine Rollfläche (12) rollt, wobei bei dem Verfahren eine Fahrgeschwindigkeit (v) des Fahrzeugs bezüglich der Rollfläche (12) verringert wird und hierzu zeitweise das Rad (10) mit einem Bremsmoment (Mb) beaufschlagt wird, welches entgegen einer Drehrichtung (14) des Rades (10) wirkt, und während des Verringerns der Fahrgeschwindigkeit (v) das Rad (10) zeitweise mittels einer Beschleunigungseinrichtung des Fahrzeugs mit einem Beschleunigungsmoment (Ma) beaufschlagt wird, welches in die Drehrichtung (14) wirkt, wobei zu wenigstens einem Zeitpunkt zumindest ein Teil des Betrages des Bremsmoments (Mb) mittels einer Reibbremse erzeugt wird und
zu wenigstens einem Zeitpunkt zumindest ein Teil des Betrages des Bremsmoments (Mb) und zu wenigstens einem Zeitpunkt zumindest ein Teil des Betrages des Beschleunigungsmoments (Ma) jeweils mittels einer elektrischen Maschine erzeugt wird,
**dadurch gekennzeichnet, dass** zu wenigstens einem Zeitpunkt nur ein Teil des Betrages des Bremsmoments mittels der Reibbremse erzeugt wird und das übrige Bremsmoment mittels der elektrischen Maschine eingestellt wird, wobei die Steuerung der Radmomente durch zwei Regelkreise getätigt wird, von denen einer einen äußeren Regelkreis und einer einen inneren Regelkreis zum Einstellen des auf das wenigstens eine Rad (10) wirkenden Moments (Ma, Mb) bildet, wobei ein Regelkreis eines ABS, das die Drehgeschwindigkeit des Rades abwechselnd aktiv über einen Bremseingiff vermindert und passiv bei gelöster Reibbremse über die Fahrbahn wieder beschleunigt und hierdurch einen Schlupf innerhalb eines Bereichs regelt, den äußeren Regelkreis und ein im Vergleich zum Regelgreis des ABS schnellerer Regelkreis für die elektrische Maschine den inneren Regelkreis bildet.

2. Verfahren nach Anspruch 1,
**dadurch gekennzeichnet, dass** durch das Beschleunigungsmoment (Ma) ein Betrag des Schlupfes (S), welchen das Rad (10) bezüglich der Rollfläche (12) aufweist, verringert wird.

3. Verfahren nach Anspruch 1 oder 2,
**dadurch gekennzeichnet, dass** zwischen dem Beaufschlagen des Rades (10) mit dem Bremsmoment (Mb) und dem Beaufschlagen des Rades (10) mit dem Beschleunigungsmoment (Ma) auf der Grundlage einer Regelung gewechselt wird, insbesondere auf der Grundlage einer PID-Regelung.

4. Verfahren nach Anspruch 3,
**dadurch gekennzeichnet, dass** durch die Regelung ein Schlupf (S), welchen das Rad (10) bezüglich der Rollfläche (12) aufweist, auf einen vorbestimmten Sollwert (S0) geregelt wird.

5. Verfahren nach einem der vorhergehenden Ansprüche,
**dadurch gekennzeichnet, dass** eine Kurvenfahrt des Fahrzeugs erkannt wird und mittels des Beschleunigungsmoments (Ma) ein Betrag einer zwischen dem Rad (10) und der Rollfläche (12) wirkenden Seitenführungskraft vergrößert wird.

6. Verfahren nach einem der vorhergehenden Ansprüche,
**dadurch gekennzeichnet, dass** eine Drehzahlmessung des Rades (10) mittels eines Resolvers einer elektrischen Maschine durchgeführt wird.

7. Fahrzeug mit
einer Bremseinrichtung zum Abbremsen des Fahrzeugs, die dazu ausgelegt ist, wenigstens ein Rad (10) des Fahrzeugs mit einem Bremsmoment (Mb) zu beaufschlagen;
einer Beschleunigungseinrichtung, welche dazu ausgelegt ist, das Rad (10) mit einem Beschleunigungsmoment (Ma) zu beaufschlagen, wobei
die Beschleunigungseinrichtung wenigstens eine elektrische Maschine und die Bremseinrichtung eine Reibbremse umfasst,
**gekennzeichnet durch** eine Steuereinrichtung, welche zwei Regelkreise aufweist, von denen einer einen äußeren und einer einen inneren Regelkreis zum Einstellen des auf das wenigstens eine Rad (10) wirkenden Moments (Ma, Mb) bildet, wobei die Steuereinrichtung dazu ausgelegt ist, das Fahrzeug mittels der Bremseinrichtung und der Beschleunigungseinrichtung gemäß einem Verfahren nach einem der vorhergehenden Ansprüche abzubremsen.

8. Fahrzeug nach Anspruch 7,
**dadurch gekennzeichnet, dass** die Beschleunigungseinrichtung als die wenigstens eine elektrische Maschine wenigstens einen elektrischen Radnabenantrieb umfasst.

9. Fahrzeug nach einem der Ansprüche 7 oder 8,
**gekennzeichnet durch** eine Drehzahlmesseinrichtung, die dazu ausgelegt eine Drehzahl (w) des Rades (10), auf der Grundlage eines Signals eines Resolvers einer elektrischen Maschine zu ermitteln.

## Claims

1. Method for braking a vehicle which rolls with at least one wheel (10) over a rolling surface (12), wherein in the method a velocity (v) of the vehicle with respect to the rolling surface (12) is reduced and for this purpose a braking torque (Mb) is temporarily applied to the wheel (10), said braking torque (Mb) acting counter to a rotational direction (14) of the wheel (10), and during the reduction in the velocity (v) an acceleration torque (Ma) is temporarily applied to the wheel (10) by means of an acceleration device of the vehicle, said acceleration torque (Ma) acting in the rotational direction (14), wherein at at least one time at least part of the absolute value of the braking torque (Mb) is generated by means of a friction brake and at at least one time at least part of the absolute value of the braking torque (Mb) and at at least one time at least part of the absolute value of the acceleration torque (Ma) is in each case generated by means of an electric machine, **characterized in that** at at least one time only part of the absolute value of the braking torque is generated by means of the friction brake, and the rest of the braking torque is set by means of the electric machine, wherein the wheel torques are controlled by two closed-loop control circuits, one of which forms an outer closed-loop control circuit and one an inner closed-loop control circuit for setting the torque (Ma, Mb) which acts on the at least one wheel, wherein a closed-loop control circuit of an ABS which reduces the rotational speed of the wheel in an alternatingly active fashion by means of braking intervention and accelerates said rotational speed again passively by means of the underlying surface when the friction brake is released, and as a result adjusts a slip within a range, forms the outer closed-loop control circuit, and a closed-loop control circuit which is faster compared to the closed-loop control circuit of the ABS, for the electric machine, forms the inner closed-loop control circuit.

2. Method according to Claim 1,
**characterized in that** the acceleration torque (Ma) reduces an absolute value of the slip (S) which the wheel (10) has with respect to the rolling surface (12).

3. Method according to Claim 1 or 2,
**characterized in that** changing over occurs between applying the braking torque (Mb) to the wheel (10) and applying the acceleration torque (Ma) to the wheel (10), on the basis of a controller, in particular on the basis of a PID controller.

4. Method according to Claim 3,
**characterized in that** a slip (S) which the wheel (10) has with respect to the rolling surface (12) is adjusted by the controller to a predetermined setpoint value (S0).

5. Method according to one of the preceding claims,
**characterized in that** cornering of the vehicle is detected and an absolute value of a lateral guiding force acting between the wheel (10) and the rolling surface (12) is increased by means of the acceleration torque (Ma).

6. Method according to one of the preceding claims,
**characterized in that** a rotational speed measurement of the wheel (10) is carried out by means of a resolver of an electric machine.

7. Vehicle having
a brake device for braking the vehicle, which brake device is configured to apply a braking torque (Mb) to at least one wheel (10) of the vehicle;
an acceleration device which is configured to apply an acceleration torque (Ma) to the wheel (10), wherein the acceleration device comprises at least one electric machine and the brake device comprises a friction brake, **characterized by** a control device which comprises two closed-loop control circuits, one of which forms an outer closed-loop control circuit, and one of which forms an inner closed-loop control circuit, for adjusting the torque (Ma, Mb) which acts on the at least one wheel (10), wherein the control device is configured to brake the vehicle by means of the brake device and the acceleration device according to a method according to one of the preceding claims.

8. Vehicle according to Claim 7,
**characterized in that** the acceleration device comprises, as the at least one electric machine, at least one electric wheel hub drive.

9. Vehicle according to one of Claims 7 and 8,
**characterized by** a rotational speed measuring device which is configured to determine a rotational speed (w) of the wheel (10) on the basis of a signal of a resolver of an electric machine.

## Revendications

1. Procédé de freinage d'un véhicule, lequel roule à l'aide d'au moins une roue (10) sur une surface de roulage (12), dans lequel procédé une vitesse de roulage (v) du véhicule est diminuée par rapport à la surface de roulage (12) et à cet effet temporairement la roue (10) est sollicitée par un couple de freinage (Mb), lequel opère à l'encontre d'un sens de rotation (14) de la roue (10), et pendant la diminution de la vitesse de roulage (v), la roue (10) est temporairement sollicitée au moyen d'un dispositif d'accélération du véhicule par un couple d'accélération (Ma), lequel opère dans le sens de rotation (14), dans lequel à au moins un moment, au moins une partie de la valeur du couple de freinage (Mb) est produite au moyen d'un frein de frottement, et
à au moins un moment au moins une partie de la valeur du couple de freinage (Mb) et à au moins un moment au moins une partie de la valeur du couple d'accélération (Ma) est produite respectivement au moyen d'une machine électrique,
**caractérisé en ce que**
à au moins un moment, seulement une partie de la valeur du couple de freinage est produite au moyen du frein par frottement et le couple de freinage résiduel est réglé au moyen de la machine électrique, la commande des couples de roue étant actionnée par deux boucles d'asservissement,
dont l'une forme une boucle d'asservissement extérieure et l'autre une boucle d'asservissement intérieure pour le réglage du couple (Ma, Mb) opérant sur au moins une roue (10), la boucle d'asservissement d'un ABS, qui, de manière alternative, diminue la vitesse de rotation de la roue de manière active par une intervention sur le freinage et l'accélère à nouveau passivement avec frein par frottement déclenché sur la voie de roulage, et de ce fait, régule un patinage dans un intervalle, formant la boucle d'asservissement extérieure et une boucle d'asservissement, par rapport à la boucle d'asservissement de l'ABS, plus rapide pour la machine électrique, formant la boucle d'asservissement intérieure.

2. Procédé selon la revendication 1,
**caractérisé en ce que** par le couple d'accélération (Ma), une valeur du patinage (S), que présente la roue (10) par rapport à la surface de roulage (12), diminue.

3. Procédé selon la revendication 1 ou 2,
**caractérisé en ce qu'**il s'opère une permutation entre la sollicitation de la roue (10) par le couple de freinage (Mb) et la sollicitation de la roue (10) par le couple d'accélération (Ma) sur base d'une régulation, en particulier sur base d'une régulation PID.

4. Procédé selon la revendication 3,
**caractérisé en ce que** par la régulation, le patinage (S), que présente la roue (10) par rapport à la surface de roulage (12), est régulé sur une valeur théorique (SO) prédéterminée.

5. Procédé selon l'une des revendications précédentes,
**caractérisé en ce qu'**un trajet en virage du véhicule est reconnu et qu'au moyen du couple d'accélération (Ma) la valeur d'une force de guidage latérale agissant entre la roue (10) et la surface de roulage (12) est augmentée.

6. Procédé selon l'une des revendications précédentes,
**caractérisé en ce qu'**une mesure du régime de la roue (10) s'effectue au moyen du décomposeur d'une machine électrique.

7. Véhicule équipé
d'un dispositif de freinage pour le freinage du véhicule, exécuté pour solliciter au moins une roue (10) du véhicule par un couple de freinage (Mb);
d'un dispositif d'accélération exécuté pour solliciter la roue (10) par un couple d'accélération (Ma),
le dispositif d'accélération comprenant au moins une machine électrique et le dispositif de freinage comprenant un frein à frottement, **caractérisé par** un dispositif de commande présentant deux boucles d'asservissement dont l'une forme une boucle d'asservissement extérieure et l'autre, une boucle d'asservissement intérieure pour le réglage du couple (Ma, Mb) agissant sur au moins une roue (10), le dispositif de direction étant exécuté pour freiner le véhicule au moyen du dispositif de freinage et du dispositif d'accélération suivant un procédé selon l'une des revendications précédentes.

8. Véhicule selon la revendication 7,
**caractérisé en ce que** le dispositif d'accélération comprend en guise de la au moins une machine électrique, au moins un entraînement électrique sur moyeu de roue.

9. Véhicule selon l'une des revendications 7 ou 8,
**caractérisé par** un dispositif de mesure du régime exécuté pour déterminer le régime (w) de la roue (10) sur base du signal d'un décomposeur d'une machine électrique.
